# FASCICULE DE BREVET EUROPEEN

(11) **EP 1 517 856 B1**
(45) Date de publication et mention de la délivrance du brevet: **18.01.2012**
(21) Numéro de dépôt: 03735206.9
(22) Date de dépôt: 26.06.2003
(51) Int. Cl.: C01B 25/22

(54) **PROCEDE DE PRODUCTION D'ACIDE PHOSPHORIQUE ET/OU D'UN SEL DE CELUI-CI ET PRODUITS AINSI OBTENUS**
VERFAHREN ZUR ERZEUGUNG VON PHOSPHORSÄURE UND/ODER DEREN SALZE UND DADURCH HERGESTELLTE PRODUKTE
METHOD FOR THE PRODUCTION OF PHOSPHORIC ACID AND/OR A SALT THEREOF AND PRODUCTS THUS OBTAINED

(30) Priorité: 28.06.2002 BE 200200416
(43) Date de publication de la demande: 30.03.2005
(73) Titulaire: Ecophos, 1348 Louvain-La-Neuve (BE)
(72) Inventeur: TAKHIM, Mohamed, Khouribga (MA)
(74) Mandataire: Pecher, Nicolas
(86) Numéro de dépôt international: PCT/BE2003/000111
(87) Numéro de publication internationale: WO 2004/002888

(56) Documents cités:
- US-A- 3 988 420
- US-A- 4 088 738
- US-A- 4 585 636
- DATABASE WPI Section Ch, Week 199002 Derwent Publications Ltd., London, GB; Class C04, AN 1990-014278 XP002236426 & SU 1 470 663 A (SYCHEV G A), 7 avril 1989 (1989-04-07)
- DATABASE WPI Section Ch, Week 197621 Derwent Publications Ltd., London, GB; Class C04, AN 1976-39447X XP002236427 & SU 481 586 A (TYURIN E I), 10 octobre 1975 (1975-10-10)

## Description

La présente invention est relative à un procédé de production d'acide phosphorique, en particulier d'acide phosphorique pur, comprenant
- au moins une attaque de minerai de phosphate par une première solution aqueuse d'acide chlorhydrique, avec formation d'une liqueur d'attaque,
- une première séparation, dans la liqueur d'attaque, entre une phase solide insoluble contenant des impuretés et une phase aqueuse séparée comportant en solution des ions phosphate, des ions chlorure et des ions calcium,
- une extraction d'une solution aqueuse contenant des ions phosphate, des ions chlorure et des ions calcium par un agent d'extraction organique, pour former une phase aqueuse d'extraction comportant des ions chlore et des ions calcium et une phase organique d'extraction contenant de l'acide phosphorique, et
- une réextraction de la phase organique d'extraction par un agent de réextraction aqueux, pour isoler une phase aqueuse de réextraction contenant des ions phosphate, ainsi que, éventuellement,
- une concentration de la phase aqueuse de réextraction pour former une solution aqueuse d'acide phosphorique pur.

On connaît depuis longtemps des procédés de ce genre faisant intervenir une attaque chlorhydrique du minerai et une extraction liquide-liquide de la phase liquide résultant d'une séparation, à partir de la liqueur d'attaque, des matières insolubles (voir par exemple les brevets US-3304157, GB-1051521 et ES-2013211, ainsi que l'article I.M.I. Staff Report, Development and implementation of solvent extraction processes in the chemical process industries, in Proc. Int. Solv. Extr. Conference, ISEC'71, The Haghe, Avril 19-23, 1971, Paper n° 94).

Ces procédés présentent l'inconvénient de faire généralement usage, pour l'attaque, d'une solution concentrée d'HCl, pouvant atteindre 20 % et même 30 % en poids. Le minerai à utiliser doit être de bonne qualité, c'est-à-dire à teneur en P₂O₅ élevée, et un broyage fin du minerai est généralement requis, ce qui augmente les coûts. On obtient au cours de l'attaque un choc thermique, dû non seulement à l'exothermie de la réaction, mais aussi à l'énergie de dissolution dégagée, et les matières insolubles sont donc difficiles à séparer, car la liqueur obtenue est visqueuse et chargée de matières organiques originaires du minerai. Etant donné la haute température et la concentration de la solution d'HCl, des problèmes de corrosion importants surgissent.

Un autre inconvénient majeur de ces procédés se situe dans l'extraction par un solvant organique d'une phase aqueuse qui est relativement pauvre en P₂O₅. Elle en contient au maximum 5 à 6 % en poids. L'extraction est donc difficile et d'un rendement peu avantageux, et l'étape de concentration de la solution aqueuse d'acide phosphorique obtenue après réextraction consomme beaucoup d'énergie.

Enfin, dans la phase aqueuse issue de l'extraction et contenant en solution du CaCl₂ et de l'acide chlorhydrique, il faut récupérer les traces de solvant organique entraîné. Or, cette phase aqueuse est très volumineuse et cette étape consomme elle aussi beaucoup d'énergie, en particulier si l'on applique pour ce faire un entraînement à la vapeur.

On connaît aussi un procédé d'attaque chlorhydrique dans lequel le minerai est soumis à une première attaque limitée par de l'acide chlorhydrique dilué. La fraction solide, ainsi enrichie en P₂O₅, est alors soumise à une seconde attaque avec de l'acide chlorhydrique plus concentré, puis à une extraction liquide-liquide pour produire de l'acide phosphorique (v. US-A-3.988.420).

On connaît bien sûr d'autres procédés de production d'acide phosphorique, par exemple le procédé par voie thermique basé sur la combustion du phosphore, ou des procédés par voie humide basé eux aussi sur une attaque des minerais de phosphate par un acide, généralement par de l'acide sulfurique, ce dernier procédé donnant lieu à une production importante de gypse, comme sous-produit.

La présente invention a pour but de mettre au point un procédé perfectionné de production d'acide phosphorique et/ou d'un sel de celui-ci, par voie humide, par attaque à l'aide d'acide chlorhydrique. Ce procédé doit permettre d'éviter les inconvénients précités, et notamment un broyage fin ou une calcination du minerai extrait, sans avoir d'exigence particulière sur la qualité du minerai, et il doit proposer une extraction liquide-liquide performante donnant lieu à une solution d'acide phosphorique pur concentrée, sans nuire à l'environnement.

On résout ces problèmes suivant l'invention par un procédé tel que décrit au début, qui comprend en outre
- une neutralisation de ladite phase aqueuse séparée de la liqueur d'attaque par addition d'un composé de calcium pour former avec lesdits ions phosphate un phosphate de calcium insoluble dans l'eau, qui précipite,
- une deuxième séparation, dans ladite phase aqueuse neutralisée, entre une phase aqueuse comportant en solution des ions calcium et des ions chlorure et une phase solide précipitée à base dudit phosphate de calcium insoluble dans l'eau, et
- une solubilisation d'au moins une partie de ladite phase solide précipitée, séparée, dans une deuxième solution aqueuse d'acide chlorhydrique, avec formation de ladite solution aqueuse contenant des ions phosphate, des ions chlorure et des ions calcium à extraire par un agent d'extraction organique.

Ce procédé présente l'avantage de prévoir une attaque d'un minerai qui peut être modérément concentré en P₂O₅ par une première fraction d'acide chlorhydrique qui peut être diluée, une séparation d'une phase solide enrichie en P₂O₅ et débarrassée des matières inattaquées et insolubles dans l'eau et une solubilisation de cette phase solide enrichie en P₂O₅ par une deuxième fraction d'acide chlorhydrique plus concentrée. Comme l'attaque chlorhydrique se passe dans un milieu dilué, et donc non visqueux, la séparation des matières insolubles est simple et rapide, il n'y a pas de dégagement de chaleur pendant l'attaque qui se passe avantageusement à la température ambiante, et les problèmes de corrosion par l'acide chlorhydrique sont largement évités.

Par ailleurs, l'extraction liquide-liquide est effectuée dans une phase liquide solubilisée riche en P₂O₅ et son rendement peut donc en être fortement augmenté. Le nombre d'étages d'extraction par exemple peut être notablement réduit et la concentration finale éventuelle demande une moindre consommation d'énergie, par rapport à l'état antérieur de la technique cité.

Dans le procédé suivant l'invention, la qualité du minerai a peu d'importance. Sa teneur en P₂O₅ peut être par exemple de 15 à 38 % en poids, sans problème, et des minerais d'un coût favorable peuvent donc être mis en oeuvre. On peut par exemple envisager un minerai présentant en % en poids 20-38 % de P₂O₅, 34-40 % de Ca et 5 à 10 % d'impuretés, avec un rapport Ca/P de 1,5 à 2,4.

Par la neutralisation ultérieure, on produit un précipité que l'on peut appeler "enrichi" en P₂O₅ et épuré par rapport au minerai, puisque sa teneur en P₂O₅ peut être de 40 à 50 % en poids.

Le minerai ne doit pas être finement broyé et il peut présenter une taille de grains de l'ordre de 150-500 µm.

L'acide chlorhydrique utilisé dans l'attaque est de préférence à l'état dilué. Il présente avantageusement une concentration maximale dans l'eau égale à 10 % en poids, avantageusement de 3 à 6 %, de préférence inférieure ou égale à 5 %. Cette attaque, peu agressive, en milieu non visqueux, est de ce fait très sélective, c'est-à-dire qu'elle solubilise préférentiellement et complètement le P₂O₅ et peu d'impuretés. La séparation des insolubles et des inattaqués s'effectue de manière simple et complète ce qui permet donc d'obtenir ensuite un sel de phosphate insoluble "enrichi en P₂O₅" et profondément dépourvu d'impuretés. Dans la liqueur d'attaque, le rapport molaire entre HCl et Ca est de préférence compris entre 0,6 et 1,3, avantageusement entre 0,7 et 1,2.

Le procédé suivant l'invention permet donc l'utilisation de minerai pauvre en P₂O₅, par exemple chargé en Fe et Mg, et il procure à l'exploitant une grande flexibilité de choix du minerai sur le marché. Il lui permet l'usage d'acide chlorhydrique dilué, qui lui aussi est d'un coût favorable et permet d'éviter les problèmes de choc thermique et de viscosité au moment de l'attaque.

La séparation de la liqueur d'attaque peut s'effectuer par tout moyen approprié, par exemple par filtration, décantation ou processus analogue.

La solution aqueuse ainsi obtenue contient en solution du chlorure de calcium CaCl₂, de l'acide phosphorique et du dihydrogénophosphate de calcium soluble dans l'eau (MCP), et elle est amenée à la neutralisation.

Dans l'étape de neutralisation, on introduit dans cette solution aqueuse un composé de calcium, par exemple de l'hydroxyde de calcium, de l'oxyde de calcium, ou un sel de calcium soluble dans l'eau, comme du carbonate de calcium.

Par la montée du pH, il se forme du monohydrogénophosphate de calcium (DCP) insoluble dans l'eau, qui précipite.

On peut séparer ce précipité par exemple par filtration. Le gâteau de filtration peut par exemple contenir 40 à 50 % en P₂O₅, 25 à 28 % de Ca et éventuellement de faibles traces d'impuretés.

Pour la solubilisation du DCP, on utilise à nouveau de l'acide chlorhydrique, mais en concentration plus élevée, par exemple de 15 à 20 % en poids. On obtient alors une solution claire, puisque les matières insolubles ont déjà été éliminées et le coefficient d'extraction va pouvoir être favorable puisque la concentration en P₂O₅ est déjà relativement élevée, de l'ordre de 8 à 15 % en poids en P₂O₅, de préférence de 10 à 13 %, dans la solution solubilisée.

Au cours de l'étape d'extraction on peut utiliser un agent d'extraction organique approprié quelconque, par exemple ceux recommandés dans les brevets US-A-3304157, GB-1051521, GB-1142719, FR-1427531 et FR-1396077, en particulier du n-butanol.

Suivant une forme de réalisation avantageuse de l'invention, le procédé comprend en outre, après ladite extraction, un lavage de la phase organique extraite par une fraction de la phase aqueuse de réextraction, pour éliminer de la phase organique extraite une charge d'acide chlorhydrique et de chlorure de calcium entraînée par elle et d'éventuelles impuretés encore présentes. On obtient ainsi, après réextraction, une solution aqueuse présentant une concentration en P₂O₅ de 15 à 25 % en poids, ce qui est un excellent rendement. Par ailleurs, la teneur en HCl résiduelle peut éventuellement être de 1 à 5 % en poids, ce qui permet de réduire les recyclages de HCl et les problèmes de corrosion qui en sont la conséquence.

Suivant une forme perfectionnée de réalisation de l'invention, le procédé comprend en outre un entraînement à la vapeur de traces d'agent d'extraction organique à partir de la phase aqueuse d'extraction contenant des ions chlorure et des ions calcium. Il est connu de récupérer les traces d'agent d'extraction organique dans la phase aqueuse issue d'une extraction liquide-liquide. Toutefois, dans le procédé suivant l'invention, une partie du CaCl₂ à évacuer comme sous-produit a déjà été isolée au cours de la séparation qui a lieu après précipitation du DCP. Là elle a pu être éliminée, telle quelle, sans étape particulière d'épuration. La solution aqueuse de CaCl₂ provenant de l'extraction de la phase liquide enrichie en P₂O₅ suivant l'invention est donc d'un volume nettement réduit par rapport à la technique antérieure et les quantités de vapeur nécessaires pour entraîner l'agent d'extraction organique sont nettement plus faibles.

Suivant un mode perfectionné de réalisation de l'invention, le procédé comprend en outre un traitement de ladite phase aqueuse issue de la deuxième séparation et contenant en solution des ions calcium et des ions chlorure, par une solution aqueuse d'acide sulfurique avec formation de sulfate de calcium insoluble, qui précipite et d'une phase aqueuse à base d'acide chlorhydrique, un isolement du précipité de sulfate de calcium et un recyclage au moins partiel de la phase aqueuse à base d'acide chlorhydrique pour former ladite première et/ou deuxième solution aqueuse d'acide chlorhydrique. On peut ainsi envisager l'exploitation du procédé suivant l'invention sur des sites industriels qui ne disposent pas d'acide chlorhydrique. L'acide chlorhydrique recyclé est d'une grande pureté et il ne nécessite donc pas de renouvellement fréquent.

Ainsi qu'on peut le constater, le procédé suivant l'invention peut être mis en oeuvre dans deux modules successifs, un premier destiné à la préparation d'une phase solide à base de DCP et un deuxième destiné à la production d'acide phosphorique au départ de cette phase solide à base de DCP. Puisqu'il n'y a pas de flux de matière reliant les deux modules, il n'est pas absolument nécessaire que les étapes effectuées dans le deuxième module suivent immédiatement celles réalisées dans le premier module. On peut donc concevoir par exemple un séchage de la phase solide à base de DCP obtenue après la précipitation et la séparation du DCP, un stockage de cette phase solide séchée et même un transport de celle-ci à un site différent de celui où sont effectuées les étapes du premier module.

La présente invention peut donc couvrir un procédé dans lequel au moins une partie du DCP obtenu par précipitation est utilisée à d'autres fins que celle de servir de matière de base dans le deuxième module. On peut par exemple envisager la mise en oeuvre de ce sel d'acide phosphorique dans le domaine des engrais ou de l'alimentation du bétail.

La présente invention couvre les étapes prévues dans chacun des modules séparément.

Par conséquent, la présente invention concerne également un procédé de préparation de sel d'acide phosphorique.

On connaît déjà un procédé de préparation de DCP, comprenant
- au moins une attaque de minerai de phosphate par une solution aqueuse d'acide chlorhydrique, avec formation d'une liqueur d'attaque,
- une première séparation, dans la liqueur d'attaque, entre une phase solide insoluble et une phase aqueuse,
- une neutralisation de ladite phase aqueuse séparée par addition d'un composé de calcium pour former avec des ions phosphate contenus dans cette phase aqueuse un phosphate de calcium insoluble dans l'eau, qui précipite, et
- une deuxième séparation, dans ladite phase aqueuse neutralisée, entre une phase liquide et une phase solide précipitée à base dudit phosphate de calcium insoluble dans l'eau (v. US-A-3.988.420 déjà cité).
Ce procédé est en fait un procédé où la phase aqueuse séparée de la liqueur d'attaque est la plus pauvre possible en ions phosphate, ceux-ci pouvant être, simultanément à la production d'acide phosphorique, récupérés sous la forme de DCP.

On connaît également un procédé de préparation de DCP par une attaque du minerai à l'aide d'une solution concentrée d'acide chlorhydrique (35 %) avec tous les inconvénients déjà cités précédemment (v. SU-A-1470663).

Suivant l'invention, on prévoit, à la différence du procédé décrit cidessus à propos du US-A-3.988.420, que l'attaque du minerai de phosphate comprend une dissolution du phosphate du minerai, la liqueur d'attaque contenant ce phosphate sous forme d'ions phosphate, et en ce que la phase solide séparée de la liqueur d'attaque contient des impuretés et la phase aqueuse séparée de la liqueur d'attaque contient lesdits ions phosphate de celle-ci, des ions chlorure et des ions calcium, cette phase aqueuse étant soumise auxdites étapes de neutralisation et de deuxième séparation.

L'invention est également relative à un procédé de production d'acide phosphorique, comprenant
- une solubilisation d'une phase solide à base d'un phosphate de calcium insoluble dans l'eau dans une solution aqueuse d'acide chlorhydrique, avec formation d'une solution aqueuse solubilisée contenant des ions phosphate, des ions chlorure et des ions calcium,
- une extraction de la solution aqueuse solubilisée par un agent d'extraction organique, pour former une phase aqueuse d'extraction comportant des ions chlorure et des ions calcium et une phase organique d'extraction contenant de l'acide phosphorique, et
- une réextraction de la phase organique d'extraction par un agent de réextraction aqueux, pour isoler une phase aqueuse de réextraction contenant des ions phosphate, ainsi que, éventuellement,
- une concentration de la phase aqueuse de réextraction pour former une solution aqueuse d'acide phosphorique pur.

L'invention couvre donc également une production d'acide phosphorique à partir de DCP solide mis sur le marché, et éventuellement fabriqué par n'importe quel procédé.

D'autres modes de réalisation des procédés suivant l'invention sont indiqués dans les revendications données ci-après.

D'autres détails et particularités de l'invention ressortiront de la description donnée ci-après à titre non limitatif de modes de réalisation du procédé suivant l'invention, avec référence aux dessins annexés.
La figure 1 représente, sous la forme d'un schéma d'écoulement, un module d'épuration et d'enrichissement du minerai utilisable dans un mode de réalisation du procédé suivant l'invention.
La figure 2 représente, sous la forme d'un schéma d'écoulement, un module de production d'acide phosphorique utilisable dans un mode de réalisation du procédé suivant l'invention.

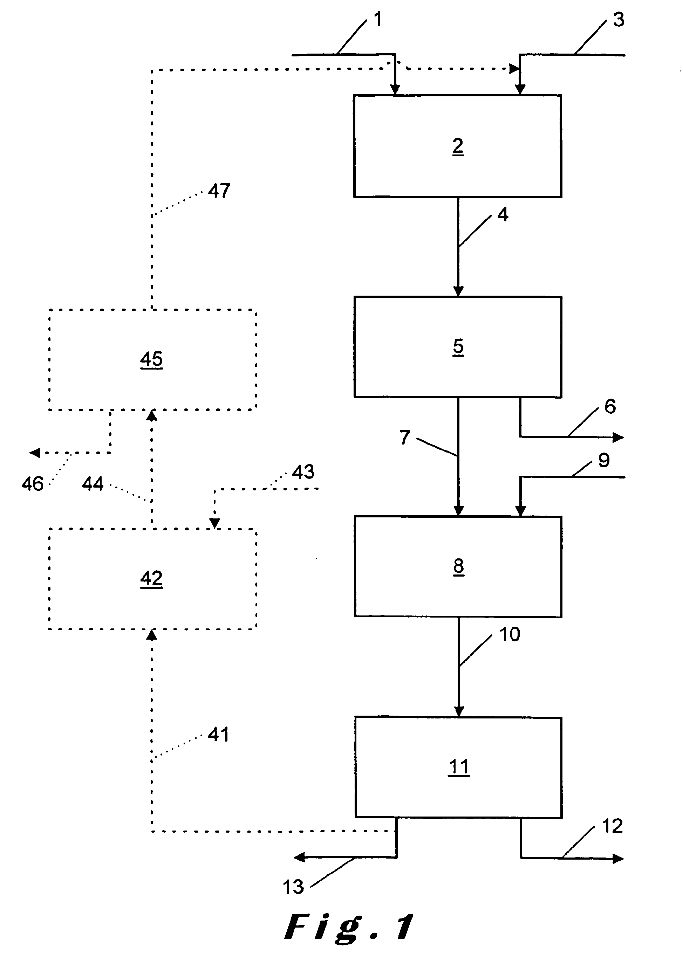

Ainsi qu'il est illustré sur la figure 1, le minerai de phosphate extrait est alimenté en 1 dans une cuve de digestion 2 où il est soumis à l'attaque d'une solution d'acide chlorhydrique de l'ordre de 5 % en poids, amenée dans cette cuve par un conduit 3. Par minerai de phosphate tel qu'extrait, on entend qu'il n'est soumis ni à une calcination, ni à un broyage fin, en particulier dans les mines où le minerai extrait se présente sous forme poudreuse. S'il s'agit de minerai d'origine volcanique, un simple concassage peut être prévu à une taille de grains de l'ordre de 150 à 500 µm.

Dans la cuve de digestion 2, la dissolution de phosphate de calcium est rapide et intense, sous la forme de H₃PO₄ et de MCP soluble. Le liquide trouble obtenu est envoyé par le conduit 4 à un dispositif de séparation 5, par exemple un filtre-presse où les solides non dissous sont séparés en 6, après addition avantageuse d'un adjuvant de filtration approprié, connu en soi, et éliminés.

La phase liquide issue de la séparation contient sous forme dissoute de l'acide phosphorique, du phosphate monocalcique MCP, du chlorure de calcium et quelques impuretés résiduelles. Le rendement de l'attaque est supérieur à 80 %, de préférence à 90 % et très avantageusement à 95 % en poids, exprimé en P₂O₅, et la température est la température ambiante.

La phase liquide séparée à partir de liqueur d'attaque est alors transférée par le conduit 7 dans une cuve de neutralisation 8, où l'on précipite le phosphate dicalcique DCP par introduction dans la phase liquide, en 9, de dérivés de calcium qui augmentent le pH, comme du carbonate de calcium ou du lait de chaux.

Pour séparer le précipité, on peut par exemple évacuer en 10 la phase liquide neutralisée et la faire passer sur un filtre à bande 11 où l'on sépare la matière solide, c'est-à-dire un gâteau humide de DCP 12, contenant approximativement 40-50 % en poids de P₂O₅, analysé sur produit sec, 25-28 % de Ca et d'éventuelles traces d'impuretés. Le filtrat est évacué en 13. Il consiste en une solution aqueuse de CaCl₂, aisément éliminable, car peu polluante, et même facilement revalorisable. Le chlorure de calcium peut être utilisé par exemple comme produit antigel sur les chaussées.

On peut aussi prévoir de diriger, par un conduit 41, cette solution aqueuse de CaCl₂ très pure vers un réacteur 42 qui est alimenté par le conduit 43 en une solution aqueuse d'acide sulfurique. Dans ce réacteur, agité à une température d'environ 60°C, pendant une heure, il se forme du sulfate de calcium insoluble, qui précipite sous une forme très pure. Par le conduit 44, la liqueur résultant de l'attaque sulfurique est soumise à une étape de séparation, par exemple par filtration en 45. La phase solide formée du sulfate de calcium est évacuée en 46 et la phase liquide formée d'une solution aqueuse de HCl très pure est renvoyée, par le conduit 47, au conduit d'alimentation en acide chlorhydrique dilué 3.

Comme l'acide sulfurique est plus fréquent et plus disponible en grandes quantités que l'acide chlorhydrique, ce recyclage permet d'améliorer encore le rendement de l'attaque chlorhydrique et même de prévoir celle-ci en des endroits où le HCl est difficile à se procurer.

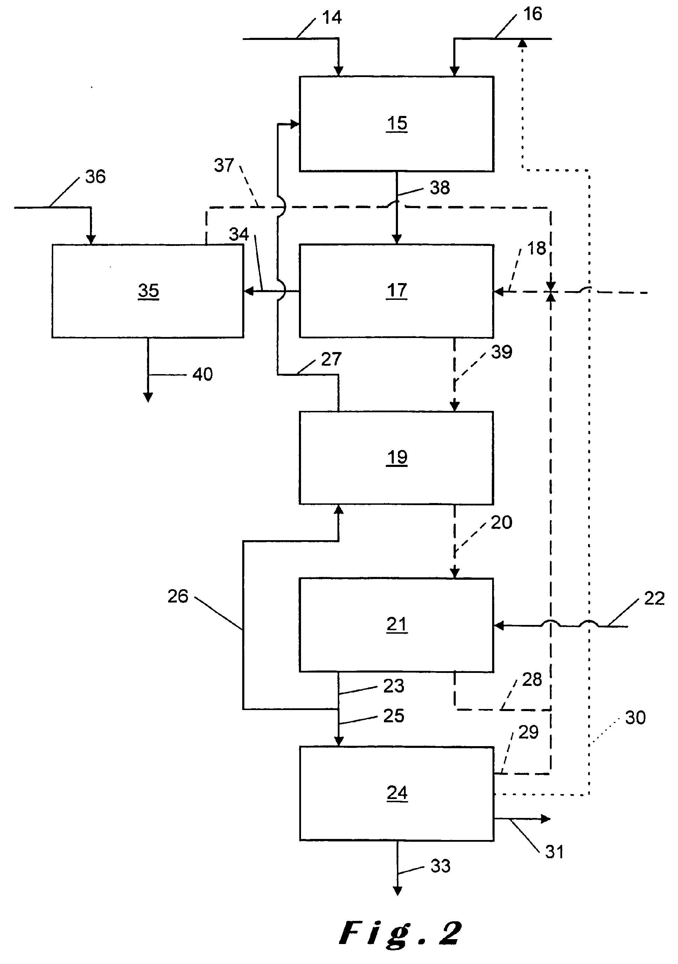

Dans le module illustré sur la figure 2, on va alors pouvoir produire de l'acide phosphorique pur par une extraction liquide-liquide. Dans ce but, le sel de DCP, par exemple obtenu sous la forme du gâteau de filtration en 12 au niveau du filtre à bande 11, est amené en 14 dans une cuve de solubilisation 15 où il est solubilisé par une nouvelle attaque à l'acide chlorhydrique introduit en 16. Cependant, cette étape est effectuée cette fois avec une solution plus concentrée d'HCl, par exemple de 15 à 20 % en poids. Cette solubilisation permet l'obtention d'une solution aqueuse contenant de l'acide phosphorique mélangé à CaCl₂, un sel soluble de chlorure de calcium. Cette solution est concentrée en P₂O₅, de l'ordre de 10 à 12 % en poids, ce qui va permettre d'améliorer positivement les transferts au niveau des opérations d'extraction liquide-liquide ultérieures et va donner lieu à des solutions concentrées en acide phosphorique lors de la réextraction.

L'élimination des matières insolubles a eu lieu lors de l'attaque dans la cuve 2, ce qui permet d'éviter dans l'extraction liquide-liquide les problèmes de formation d'émulsions lors des traitements de la phase aqueuse par un solvant organique. L'utilisation de DCP épuré et enrichi en P₂O₅ pour la préparation de la phase aqueuse de départ de l'extraction permet ainsi plus de flexibilité dans le choix du minerai et diminue le nombre d'étages d'extraction à prévoir.

La phase aqueuse solubilisée est alors envoyée par le conduit 38 dans une colonne d'extraction 17, dans laquelle est alimenté en contre-courant, par le conduit 18, un solvant organique, par exemple du n-butanol, à titre d'agent d'extraction. Le solvant organique extrait sélectivement le P₂O₅ de la phase aqueuse et l'entraîne par le conduit 39 vers une colonne de lavage 19, puis par le conduit 20, dans une colonne de réextraction 21.

Dans la colonne de réextraction 21, la phase organique est mise en contact avec de l'eau alimentée en contre-courant par l'intermédiaire du conduit 22. L'eau extrait le P₂O₅ de la phase organique. La phase aqueuse obtenue sort de la colonne 21 par le conduit 23 et est distribuée en partie vers un dispositif de concentration 24, par le conduit 25, et en partie vers la colonne de lavage 19, par le conduit 26. Là, la phase aqueuse contenant du P₂O₅ sert au lavage à contre-courant de la phase organique, pour l'élimination de la charge en chlorure et des dernières impuretés, non éliminées dans le module illustré sur la figure 1, puis elle est transférée à nouveau dans la cuve de solubilisation 15, par l'intermédiaire du conduit 27.

La phase organique provenant de la réextraction est recyclée par le conduit 28 vers la colonne d'extraction 17.

Le dispositif de concentration 24 peut être une installation courante d'évaporation à triple effet, qui vaporise successivement les traces de solvant, qui sont recyclées à la colonne d'extraction 17 par le conduit 29, le HCl encore contenu en solution, qui est recyclé au conduit d'amenée 16 de la solubilisation du DCP par le conduit 30, et une grande partie d'eau, en 31. De l'acide phosphorique est récolté sous la forme d'une solution épurée, concentrée, par le conduit 33.

La phase aqueuse issue de la colonne d'extraction 17 est alors transférée par le conduit 34 vers une colonne d'entraînement à la vapeur 35. De la vapeur d'eau est introduite en 36 dans cette colonne et elle entraîne la charge de solvant organique présente dans la phase aqueuse. Le solvant organique entraîné à la vapeur est recyclé dans la colonne d'extraction 17 par le conduit 37. La solution aqueuse de CaCl₂, qui peut éventuellement encore être traitée pour en éliminer quelques impuretés en métaux lourds, peut à son tour être évacuée, en 40.

Comme on peut le constater, seule une partie du CaCl₂ issu de l'introduction de HCl dans le déroulement du procédé doit être traitée par un entraînement à la vapeur, ce qui réduit fort le coût en énergie, par rapport aux procédés qui réalisent une extraction liquide-liquide directement sur la phase liquide séparée de la liqueur issue de l'attaque chlorhydrique.

L'invention va à présent être décrite de manière plus détaillée à l'aide d'exemples de réalisation, donnés à titre non limitatifs.

### Exemple 1

Du minerai de phosphate d'origine marocaine est alimenté à un débit de 15 kg/h dans un réacteur agité, pour être attaqué là par une solution d'acide chlorhydrique à 5 % en poids. Le débit d'alimentation de la solution de HCl est de 141 l/h, ce qui donne un rapport HCl/Ca = 0,7.

Le temps de séjour dans le réacteur d'attaque est de 30 minutes. La liqueur d'attaque non visqueuse est alors transférée dans un filtre-presse après passage intermédiaire par un bac tampon (temps de séjour dans celui-ci d'environ 1 h). La température reste ambiante. Les matières insolubles sont séparées dans le filtre-presse.

La solution sortant du filtre-presse est acheminée à un débit de 188 l/h vers deux réacteurs de neutralisation disposés en série. Du carbonate de calcium est alimenté là à un débit de 5,8 kg/h, ce qui donne un rapport molaire de Ca/P=1. Le temps de séjour est 100 minutes sur l'ensemble des deux réacteurs.

Après réaction et formation de DCP, on ajoute à la pulpe au niveau du deuxième réacteur de neutralisation une petite quantité de lait de chaux pour épuiser la charge de phosphate. La concentration du lait de chaux est de 245 g de Ca(OH)₂/kg et le débit d'alimentation dans le deuxième réacteur est de 3 l/h.

La pulpe neutralisée est alors dirigée vers un filtre à bande. Le gâteau obtenu est principalement constitué de DCP.

L'addition de Ca(OH)₂ est calculée pour obtenir dans la pulpe un rapport molaire Ca/P=0,2. Le pH dans les eaux mères filtrées se situe à environ 5 et la quantité de phosphate résiduelle y est inférieure à 1 g/kg.

### Exemple 2

On reprend les conditions de l'Exemple 1, mais dans les réacteurs de neutralisation, on ajoute uniquement du carbonate de calcium à un débit de 7,1 kg/h, ce qui donne un rapport molaire de Ca/P = 1,2

Le tableau ci-dessous illustre la composition des différents produits obtenus au cours d'un processus tel qu'appliqué dans l'exemple 1.

**Tableau**

| | | Humidité | P₂O₅ | Ca | Cl | Na | K | Mg | F | SO₄ | Si | Fe | As |
|---|---|---|---|---|---|---|---|---|---|---|---|---|---|
| | | (%) | (% m/m) | (mg/kg) | (mg/kg) | (mg/kg) | (mg/kg) | (mg/kg) | (mg/kg) | (mg/kg) | (mg/kg) | (mg/kg) | (mg/kg) |
| Filtrat MCP | | | 2,76 | 28365 | 47735 | 124 | - | 50 | 50 | 50 | - | 22,0 | 0,68 |
| Gâteau des insolubles | | 33,92 | | | | | | | | | | | |
| | total | | 13,52 | 352430 | 16835 | 2896 | 585 | 545 | 207384 | 12236 | 9200 | 3700 | 12 |
| | soluble | | 3,31 | 36327 | 37516 | | | | | | | | |
| Gâteau de DCP | | sec | 36,27 | 289008 | 8036 | | | 23,5 | | | | 584 | 2,01 |

| | | Humidité | Al | Cd | | Cu | Pb | Zn | Ni | Cr | Ti | V | U |
|---|---|---|---|---|---|---|---|---|---|---|---|---|---|
| | | (%) | (mg/kg) | (mg/kg) | | (mg/kg) | (mg/kg) | (mg/kg) | (mg/kg) | (mg/kg) | (mg/kg) | (mg/kg) | (mg/kg) |
| Filtrat MCP | | | 4 | 1,8 | | 0,42 | 0,31 | 9,5 | 3,9 | 6,2 | 33,0 | 3,1 | |
| Gâteau de DCP | | sec | 139 | 0,65 | | 1,3 | 3,7 | 36 | 3,5 | 73 | 7,6 | 56 | |

### Exemple 3a

Dans un réacteur agité de 2l on mélange d'une manière continue une solution de CaCl₂ contenant 15 % de CaCl₂, telle qu'obtenue comme eaux mères filtrées à la fin de l'exemple 1, à un débit de 4 kg/h avec de l'acide sulfurique concentré à 96 %. Le débit d'alimentation de l'acide sulfurique est de 0,54 kg/h.

Le temps de séjour dans le réacteur est de 30 min.

La pulpe formée après apparition des cristaux de gypse est alors transférée dans un filtre Buchner. La température de la réaction est de 40°C. La solution sort du filtre à un débit de 3,36 kg/h et contient principalement de l'acide chlorhydrique (10 % HCl). Elle est recyclée au niveau du réacteur d'attaque du minerai pour un nouveau cycle. Le gâteau de gypse (débit de 1,18 kg/h à 30 % d'humidité) est lavé, puis évacué. Les eaux de lavage sont recyclées avec le filtrat. Le gâteau obtenu est principalement du sulfate de calcium dihydraté.

L'addition de l'acide sulfurique est calculée pour obtenir dans la pulpe un rapport molaire de Ca/H₂SO₄ = 1.

Analyse de la solution d'acide chlorhydrique récupérée :

| | |
|---|---|
| SO₄ | : 16544 ppm |
| Ca⁺⁺ | : 3749 ppm |
| Cl⁻ | : 99507 ppm |

### Exemple 3b

Dans un réacteur agité de 2 l, on mélange d'une manière continue une solution de CaCl₂ contenant 15 % de CaCl₂ à un débit de 4 kg/h avec de l'acide sulfurique concentré à 96 %. Le débit d'alimentation de l'acide sulfurique est de 0,48 kg/h.

Le temps de séjour dans le réacteur est de 30 min.

La pulpe formée après apparition des cristaux de gypse est alors transférée dans un filtre Buchner. La température de la réaction est de 40°C. La solution sortant du filtre à un débit de 3,41 kg/h et contenant principalement de l'acide chlorhydrique (10 % HCl) est recyclée au niveau du réacteur d'attaque du minerai pour un nouveau cycle. Le gâteau de gypse (débit de 1,062 kg/h à 30 % d'humidité) est lavé, puis évacué. Les eaux de lavage sont recyclées avec le filtrat. Le gâteau obtenu est principalement du sulfate de calcium dihydraté.

L'addition de l'acide sulfurique est calculée pour obtenir dans la pulpe un rapport molaire de Ca/H₂SO₄ = 0,9.

Analyse de la solution d'acide chlorhydrique récupérée :

| | |
|---|---|
| SO₄⁼ | : 11045 ppm |
| Ca⁺⁺ | : 6978 ppm |
| Cl⁻ | : 101846 ppm |

### Exemple 4

On laisse digérer du DCP obtenu par le procédé de l'exemple 1 par une solution d'acide chlorhydrique à 20 %. La liqueur de dissolution présente l'analyse suivante : 20 % H₃PO₄, 10 % HCl, 10 % CaCl₂. Cette liqueur est mise en contact, à contre-courant, avec un solvant organique, du n-butanol, dans une colonne à un débit de 100 l/h de phase aqueuse et avec un rapport volumique 0/A (phase organique/phase aqueuse) = 2. L'acide phosphorique et l'acide chlorhydrique passent dans le solvant tandis que la plus grande partie du chlorure de calcium et des impuretés restent dans la phase aqueuse (rendement d'extraction de P₂O₅ de 80 %). Le solvant organique chargé de HCl et de H₃PO₄ (analyse : 10 % H₃PO₄, 2,5 % HCl, 0,8 % CaCl₂) est mis en contact dans un extracteur à trois étages avec une fraction de la solution aqueuse d'acide phosphorique obtenue au cours de la phase ci-après (analyse : 30 % H₃PO₄) et ceci avec un rapport volumique 0/A = 6. Cette opération élimine de la solution organique le chlorure de calcium et les impuretés entraînées lors d'extraction liquide-liquide, ce qui permet d'atteindre de grandes puretés. La solution de lavage est alors recyclée en tête de l'extraction par solvant organique. Le rendement d'élimination du calcium à partir de la phase organique est très élevé : >99 %.

La solution organique est lavée à contre-courant par de l'eau dans une colonne à plusieurs plateaux. L'eau extrait l'acide phosphorique et l'acide chlorhydrique de la phase organique. Le solvant organique, débarrassé des acides, peut être recyclé au niveau de l'étape d'extraction. D'autre part, la solution d'acide phosphorique passe à une étape de concentration.

Rendement de l'opération : 80 % de ré-extraction de P₂O₅. Toutes ces opérations se déroulent à la température ambiante.

La solution d'acide phosphorique diluée, récupérée, est traitée par évaporation pour concentrer la solution et pour éliminer les traces encore présentes de HCl et de solvant, par distillation.

## Revendications

1. Procédé de préparation de sel d'acide phosphorique, comprenant
(a) au moins une attaque de minerai de phosphate par une solution aqueuse d'acide chlorhydrique, avec formation d'une liqueur d'attaque,
(b) une première séparation, dans la liqueur d'attaque, entre une phase solide insoluble et une phase aqueuse,
(c) une neutralisation de ladite phase aqueuse séparée par addition d'un composé de calcium pour former avec des ions phosphate contenus dans cette phase aqueuse un phosphate de calcium insoluble dans l'eau, qui précipite, et
(d) une deuxième séparation, dans ladite phase aqueuse neutralisée, entre une phase liquide et une phase solide précipitée à base dudit phosphate de calcium insoluble dans l'eau,
**caractérisé en ce que** l'attaque du minerai de phosphate comprend une dissolution du phosphate du minerai, la liqueur d'attaque contenant ce phosphate sous forme d'ions phosphate, dans ladite liqueur d'attaque, le rapport molaire entre HCl et Ca est compris entre 0,6 et 1,3, et **en ce que** la phase solide séparée de la liqueur d'attaque contient des impuretés et la phase aqueuse séparée de la liqueur d'attaque contient lesdits ions phosphate de celle-ci, des ions chlorure et des ions calcium, cette phase aqueuse étant soumise auxdites étapes de neutralisation et de deuxième séparation.

2. Procédé suivant la revendication 1, **caractérisé en ce que** ladite solution aqueuse d'acide chlorhydrique présente une concentration en HCl au maximum égale à 10% en poids, avantageusement de 3 à 6%, de préférence de 3 à 5%.

3. Procédé suivant l'une ou l'autre des revendications 1 ou 2, **caractérisé en ce que** l'étape d'attaque est effectuée à la température ambiante.

4. Procédé suivant l'une quelconque des revendications 1 à 3, **caractérisé en ce que** le composé de calcium de l'étape de neutralisation est choisi parmi le groupe constitué de l'hydroxyde de calcium, de l'oxyde de calcium et des sels de calcium solubles dans l'eau, comme du carbonate de calcium, et **en ce que** le phosphate de calcium insoluble dans l'eau est du monohydrogénophosphate de calcium (DCP).

5. Procédé suivant l'une quelconque des revendications 1 à 4, **caractérisé en ce que** ladite phase solide précipitée, séparée, à base dudit phosphate de calcium insoluble, présente une concentration de 40 à 50% en poids de P₂O₅, et de 25 à 28% de Ca.

6. Procédé suivant l'une quelconque des revendications 1 à 5, **caractérisé en ce qu'**il comprend en outre un traitement de ladite phase liquide issue de la deuxième séparation et contenant en solution des ions calcium et des ions chlorure, par une solution aqueuse d'acide sulfurique avec formation de sulfate de calcium insoluble, qui précipite, et d'une phase aqueuse à base d'acide chlorhydrique, un isolement du précipité de sulfate de calcium et un recyclage au moins partiel de la phase aqueuse à base d'acide chlorhydrique pour former ladite première et/ou deuxième phase aqueuse d'acide chlorhydrique.

7. Procédé de production d'acide phosphorique comprenant
- une solubilisation d'une phase solide à base d'un phosphate de calcium insoluble dans l'eau dans une solution aqueuse d'acide chlorhydrique, avec formation d'une solution aqueuse solubilisée contenant des ions phosphate, des ions chlorure et des ions calcium,
- une extraction de la solution aqueuse solubilisée par un agent d'extraction organique, pour former une phase aqueuse d'extraction comportant des ions chlorure et des ions calcium et une phase organique d'extraction contenant de l'acide phosphorique, et
- une réextraction de la phase organique d'extraction par un agent de réextraction aqueux, pour isoler une phase aqueuse de réextraction contenant des ions phosphate, ainsi que éventuellement,
- une concentration de la phase aqueuse de réextraction pour former une solution aqueuse d'acide phosphorique pur.

8. Procédé suivant la revendication 7, **caractérisé en ce que** la solution aqueuse d'acide chlorhydrique présente une concentration en HCl de 15 à au maximum 20% en poids.

9. Procédé suivant l'une des revendications 7 et 8, **caractérisé en ce que** ladite solution aqueuse solubilisée, à extraire, présente une concentration en P₂O₅ de 8 à 15% en poids, de préférence de 10 à 13%.

10. Procédé suivant l'une des revendications 7 à 9, **caractérisé en ce qu'**il comprend en outre, après ladite extraction, un lavage de la phase organique d'extraction par une fraction de la phase aqueuse de réextraction, pour éliminer de la phase organique d'extraction une charge d'acide chlorhydrique et de chlorure de calcium entraînée par elle et d'éventuelles impuretés encore présentes.

11. Procédé suivant la revendication 10, **caractérisé en ce que** la phase aqueuse de réextraction présente une concentration en P₂O₅ de 15 à 25% en poids.

12. Procédé suivant l'une quelconque des revendications 7 à 11, **caractérisé en ce que** la phase solide à base de phosphate de calcium insoluble dans l'eau est obtenue par un procédé suivant l'une quelconque des revendications 1 à 6.

13. Procédé de production d'acide phosphorique suivant la revendication 1, **caractérisé en ce qu'**il comprend suite à l'étape b) :
- une extraction d'une solution aqueuse contenant des ions phosphate, des ions chlorure et des ions calcium par un agent d'extraction organique, pour former une phase aqueuse d'extraction comportant des ions chlorure et des ions calcium et une phase organique d'extraction contenant de l'acide phosphorique, et
- une réextraction de la phase organique d'extraction par un agent de réextraction aqueux, pour isoler une phase aqueuse de réextraction contenant des ions phosphate, ainsi que, éventuellement,
- une concentration de la phase aqueuse de réextraction pour former une solution aqueuse d'acide phosphorique pur,
et comprenant en outre suite à l'étape d)
- une solubilisation d'au moins une partie de ladite phase solide précipitée, séparée, dans une deuxième solution aqueuse d'acide chlorhydrique, avec formation de ladite solution aqueuse contenant des ions phosphate, des ions chlorure et des ions calcium à extraire par un agent d'extraction organique.

14. Procédé suivant la revendication 13, **caractérisé en ce qu'**il comprend en outre, après ladite extraction, un lavage de la phase organique extraite par une fraction de la phase aqueuse de réextraction, pour éliminer de la phase organique extraite une charge d'acide chlorhydrique et de chlorure de calcium entraînée par elle et d'éventuelles impuretés encore présentes.

15. Procédé suivant l'une quelconque des revendications 13 et 14, **caractérisé en ce qu'**il comprend en outre un entraînement à la vapeur de traces d'agent d'extraction organique à partir de la phase aqueuse d'extraction contenant des ions chlore et des ions calcium.

## Claims

1. Process for the preparation of phosphoric acid salt, comprising
(a) at least one attack on phosphate ore by an aqueous hydrochloric acid solution, with formation of an attack liquor,
(b) a first separation, in the attack liquor, between an insoluble solid phase and an aqueous phase,
(c) a neutralization of the said separated aqueous phase by addition of a calcium compound in order to form, with phosphate ions present in this aqueous phase, a water-insoluble calcium phosphate, which precipitates, and
(d) a second separation, in the said neutralized aqueous phase, between a liquid phase and a precipitated solid phase based on the said water-insoluble calcium phosphate,
**characterized in that** the attack on the phosphate ore comprises a dissolution of the phosphate of the ore, the attack liquor comprising this phosphate in the form of phosphate ions, in the said attack liquor, the molar ratio between HCl and Ca is between 0.6 and 1.3, and **in that** the solid phase separated from the attack liquor comprises impurities and the aqueous phase separated from the attack liquor comprises the said phosphate ions of the latter, chloride ions and calcium ions, this aqueous phase being subjected to the said neutralization and second separation stages.

2. Process according to Claim 1, **characterized in that** the said aqueous hydrochloric acid solution exhibits an HCl concentration at most equal to 10% by weight, advantageously from 3 to 6% by weight and preferably from 3 to 5% by weight.

3. Process according to one or other of Claims 1 or 2, **characterized in that** the attack stage is carried out at ambient temperature.

4. Process according to any one of Claims 1 to 3, **characterized in that** the calcium compound of the neutralization stage is selected from the group consisting of calcium hydroxide, calcium oxide and water-soluble calcium salts, such as calcium carbonate, and **in that** the water-insoluble calcium phosphate is calcium monohydrogenphosphate (DCP).

5. Process according to any one of Claims 1 to 4, **characterized in that** the said separated precipitated solid phase based on the said insoluble calcium phosphate exhibits a concentration of 40 to 50% by weight of P₂O₅ and of 25 to 28% of Ca.

6. Process according to any one of Claims 1 to 5, **characterized in that** it additionally comprises a treatment of the said liquid phase resulting from the second separation, comprising calcium ions and chloride ions in solution, by an aqueous sulphuric acid solution with formation of insoluble calcium sulphate, which precipitates, and of an aqueous phase based on hydrochloric acid, an isolation of the calcium sulphate precipitate and an at least partial recycling of the aqueous phase based on hydrochloric acid in order to form the said first and/or second aqueous hydrochloric acid phase.

7. Process for the production of phosphoric acid, comprising
- a dissolution of a solid phase based on a water-insoluble calcium phosphate in an aqueous hydrochloric acid solution, with formation of a dissolved aqueous solution comprising phosphate ions, chloride ions and calcium ions,
- an extraction of the dissolved aqueous solution by an organic extraction agent, to form an aqueous extraction phase comprising chloride ions and calcium ions and an organic extraction phase comprising phosphoric acid, and
- a re-extraction of the organic extraction phase by an aqueous re-extraction agent, to isolate an aqueous re-extraction phase comprising phosphate ions, and, optionally,
- a concentration of the aqueous re-extraction phase, to form an aqueous solution of pure phosphoric acid.

8. Process according to Claim 7, **characterized in that** the aqueous hydrochloric acid solution exhibits a concentration of HCl of from 15 to at most 20% by weight.

9. Process according to either of Claims 7 and 8, **characterized in that** the said dissolved aqueous solution to be extracted exhibits a concentration of P₂O₅ of from 8 to 15% by weight, preferably of from 10 to 13% by weight.

10. Process according to one of Claims 7 to 9, **characterized in that** it additionally comprises, after the said extraction, a washing of the organic extraction phase with a fraction of the aqueous re-extraction phase, in order to remove, from the organic extraction phase, a load of hydrochloric acid and calcium chloride entrained by it and possible impurities still present.

11. Process according to Claim 10, **characterized in that** the aqueous re-extraction phase exhibits a concentration of P₂O₅ of from 15 to 25% by weight.

12. Process according to any one of Claims 7 to 11, **characterized in that** the solid phase based on water-insoluble calcium phosphate is obtained by a process according to any one of Claims 1 to 6.

13. Process for the production of phosphoric acid according to Claim 1, **characterized in that** it comprises, subsequent to stage b):
- an extraction of an aqueous solution comprising phosphate ions, chloride ions and calcium ions by an organic extraction agent, in order to form an aqueous extraction phase comprising chloride ions and calcium ions and an organic extraction phase comprising phosphoric acid, and
- a re-extraction of the organic extraction phase by an aqueous re-extraction agent, in order to isolate an aqueous re-extraction phase comprising phosphate ions, and, optionally,
- a concentration of the aqueous re-extraction phase, in order to form an aqueous solution of pure phosphoric acid,
and additionally comprises, subsequent to stage d):
- a dissolution of at least a portion of the said separated precipitated solid phase in a second aqueous hydrochloric acid solution, with formation of the said aqueous solution comprising phosphate ions, chloride ions and calcium ions, to be extracted by an organic extraction agent.

14. Process according to Claim 13, **characterized in that** it additionally comprises, after the said extraction, a washing of the extracted organic phase by a fraction of the aqueous re-extraction phase, in order to remove, from the extracted organic phase, a load of hydrochloric acid and calcium chloride entrained by it and possible impurities still present.

15. Process according to any one of Claims 13 and 14, **characterized in that** it additionally comprises a steam distillation of traces of organic extraction agent from the aqueous extraction phase comprising chloride ions and calcium ions.

## Patentansprüche

1. Verfahren zur Herstellung eines Phosphorsäuresalzes, umfassend
(a) mindestens einen Phosphaterzaufschluss durch eine wässrige Chlorwasserstoffsäurelösung unter Bildung einer Aufschlusslauge,
(b) eine erste Trennung in der Aufschlusslauge zwischen einer unlöslichen festen Phase und einer wässrigen Phase,
(c) eine Neutralisation der abgetrennten wässrigen Phase durch Zugabe einer Calciumverbindung, um mit Phosphationen, die in dieser wässrigen Phase enthalten sind, ein wasserunlösliches Calciumphosphat zu bilden, das präzipitiert, und
(d) eine zweite Trennung in der neutralisierten wässrigen Phase zwischen einer flüssigen Phase und einer präzipitierten festen Phase auf der Basis des wasserunlöslichen Calciumphosphats,
**dadurch gekennzeichnet, dass** der Phosphaterzaufschluss eine Auflösung des Phosphaterzes, wobei die Aufschlusslauge dieses Phosphat in Form von Phosphationen enthält, in der Aufschlusslauge umfasst,
wobei das Molverhältnis zwischen HCl und Ca im Bereich zwischen 0,6 und 1,3 liegt, und dadurch dass die feste Phase, getrennt von der Aufschlusslauge, Verunreinigungen enthält, und die wässrige Phase, getrennt von der Aufschlusslauge, deren Phosphationen, Chloridionen und Calciumionen enthält, wobei diese wässrige Phase den Schritten zur Neutralisation und zur zweiten Trennung unterzogen wird.

2. Verfahren nach Anspruch 1, **dadurch gekennzeichnet, dass** die wässrige Chlorwasserstoffsäurelösung eine HCl-Konzentration von maximal gleich 10 Gew.-%, vorteilhafterweise von 3 bis 6 Gew.-%, bevorzugt von 3 bis 5 Gew.-%, aufweist.

3. Verfahren nach irgendeinem der Ansprüche 1 oder 2, **dadurch gekennzeichnet, dass** der Schritt zum Aufschließen bei Umgebungstemperatur durchgeführt wird.

4. Verfahren nach einem der Ansprüche 1 bis 3, **dadurch gekennzeichnet, dass** die Calciumverbindung aus dem Schritt zur Neutralisation ausgewählt ist aus der Gruppe bestehend aus Calciumhydroxid, Calciumoxid und wasserlöslichen Calciumsalzen, wie Calciumcarbonat, und dadurch, dass das wasserunlösliche Calciumphosphat Calciummonohydrogenphosphat (DCP) ist.

5. Verfahren nach einem der Ansprüche 1 bis 4, **dadurch gekennzeichnet, dass** die getrennte, präzipitierte feste Phase auf der Basis des unlöslichen Calciumphosphats eine Konzentration von 40 bis 50 Gew.-% P₂O₅ und 25 bis 28 Gew.-% Ca aufweist.

6. Verfahren nach einem der Ansprüche 1 bis 5, **dadurch gekennzeichnet, dass** es ferner eine Behandlung der flüssigen Phase, die aus der zweiten Trennung stammt und die Calciumionen und Chloridionen in Lösung enthält, durch eine wässrige Schwefelsäurelösung unter Bildung von unlöslichem Calciumsulfat, das präzipitiert, und einer wässrigen Phase auf der Basis von Chlorwasserstoffsäure, ein Isolieren des Präzipitats des Calciumsulfats und eine mindestens teilweise Rückführung der wässrigen Phase auf der Basis von Chlorwasserstoffsäure umfasst, um die erste und/oder zweite wässrige Chlorwasserstoffsäurephase zu bilden.

7. Verfahren zur Erzeugung von Phosphorsäure, umfassend
- eine Solubilisierung einer festen Phase auf der Basis eines wasserunlöslichen Calciumphosphats in einer wässrigen Chlorwasserstoffsäurelösung unter Bildung einer solubilisierten wässrigen Lösung, die Phosphationen, Chloridionen und Calciumionen enthält,
- eine Extraktion der solubilisierten wässrigen Lösung durch ein organisches Extraktionsmittel, um eine wässrige Extraktionsphase zu bilden, die Chloridionen und Calciumionen umfasst, und eine organische Extraktionsphase, die Phosphorsäure enthält, und
- eine Reextraktion der organischen Extraktionsphase durch ein wässriges Reextraktionsmittel, um eine wässrige Reextraktionsphase zu isolieren, die Phosphationen enthält, sowie gegebenenfalls,
- eine Konzentration der wässrigen Reextraktionsphase, um eine reine wässrige Phosphorsäurelösung zu bilden.

8. Verfahren nach Anspruch 7, **dadurch gekennzeichnet, dass** die wässrige Chlorwasserstoffsäurelösung eine HCl-Konzentration von 15 bis maximal 20 Gew.-% aufweist.

9. Verfahren nach einem der Ansprüche 7 und 8, **dadurch gekennzeichnet, dass** die zu extrahierende solubilisierte wässrige Lösung eine P₂O₅-Konzentration von 8 bis 15 Gew.-%, bevorzugt von 10 bis 13 Gew.-%, aufweist.

10. Verfahren nach einem der Ansprüche 7 bis 9, **dadurch gekennzeichnet, dass** es ferner, nach der Extraktion, eine Wäsche der organischen Extraktionsphase durch eine Fraktion der wässrigen Reextraktionsphase umfasst, um aus der organischen Extraktionsphase eine Chlorwasserstoffsäureladung und von ihr mitgeführtes Calciumchlorid und gegebenenfalls noch vorhandene Verunreinigungen zu entfernen.

11. Verfahren nach Anspruch 10, **dadurch gekennzeichnet, dass** die wässrige Reextraktionsphase eine P₂O₅-Konzentration von 15 bis 25 Gew.-% aufweist.

12. Verfahren nach einem der Ansprüche 7 bis 11, **dadurch gekennzeichnet, dass** die feste Phase auf der Basis von wasserunlöslichem Calciumphosphat durch ein Verfahren nach einem der Ansprüche 1 bis 6 erhalten wird.

13. Verfahren zur Erzeugung von Phosporsäure nach Anspruch 1, **dadurch gekennzeichnet, dass** es nach Schritt b) Folgendes umfasst:
- eine Extraktion einer wässrigen Lösung, die Phosphationen, Chloridionen und Calciumionen enthält, durch ein organisches Extraktionsmittel, um eine wässrige Extraktionsphase zu bilden, die Chloridionen und Calciumionen umfasst, und eine organische Extraktionsphase, die Phosphorsäure enthält, und
- eine Reextraktion der organischen Extraktionsphase durch ein wässriges Reextraktionsmittel, um eine wässrige Reextraktionsphase zu isolieren, die Phosphationen enthält, sowie gegebenenfalls,
- eine Konzentration der wässrigen Reextraktionsphase, um eine reine wässrige Phosphorsäurelösung zu bilden,
und ferner nach Schritt d)
- eine Solubilisierung mindestens eines Teils der getrennten, ausgefällten festen Phase in einer zweiten wässrigen Chlorwasserstoffsäurelösung umfasst, unter Bildung der wässrigen Lösung, die Phosphationen, Chloridionen und Calciumionen enthält, die durch ein organisches Extraktionsmittel zu extrahieren sind.

14. Verfahren nach Anspruch 13, **dadurch gekennzeichnet, dass** es ferner, nach der Extraktion, eine Wäsche der extrahierten organischen Phase durch eine Fraktion der wässrigen Reextraktionsphase umfasst, um aus der extrahierten organischen Phase eine Chlorwasserstoffsäureladung und von ihr mitgeführtes Calciumchlorid und gegebenenfalls noch vorhandene Verunreinigungen zu entfernen.

15. Verfahren nach einem der Ansprüche 13 und 14, **dadurch gekennzeichnet, dass** es ferner eine Wasserdampfdestillation von Spuren von organischem Extraktionsmittel aus der wässrigen Extraktionsphase umfasst, die Chlorionen und Calciumionen enthält.
